# EUROPÄISCHE PATENTANMELDUNG

(11) **EP 0 761 414 A2**
(43) Veröffentlichungstag der Anmeldung: **12.03.1997**
(21) Anmeldenummer: 96114040.7
(22) Anmeldetag: 03.09.1996
(51) Int. Cl.: B29C 53/08, B65D 83/76

(54) **Austragvorrichtung für Medien sowie Verfahren zur Herstellung einer Austragvorrichtung**

(30) Priorität: 07.09.1995 DE 19533052
(71) Anmelder: Ing. Erich Pfeiffer GmbH, 78315 Radolfzell (DE)
(72) Erfinder: Fuchs, Karl-Heinz, 78315 Radolfzell (DE); Ritsche, Stefan, 78315 Radolfzell (DE)
(74) Vertreter: Patentanwälte Ruff, Beier, Schöndorf und Mütschele

(57) **Zusammenfassung**

Bei einer Austragvorrichtung für Medien wird ein Steigrohr (16) oder ein anderer Wandungskörper so mit unterschiedlichen Wandungsdicken ausgebildet, daß aufgrund der Materialschrumpfung nach Entnahme aus der Form eine das Steigrohrende (22) seitlich auslenkende Krümmung des Steigrohres (16) eintritt, die für eine bodennahe Anordnung dieses Endes (22) in einem Medienspeicher zweckmäßig ist. Dadurch kann mit einer sehr einfachen Spritzform-Extrusionsdüse ein geradliniges Steigrohr (16) hergestellt und nach Entnahme aus der Spritzform in eine eigenstabile Krümmung (30) überführt werden.

## Beschreibung

Die Erfindung betrifft eine Vorrichtung zum Austrag von Medien in kompakter Stückform oder fließfähiger Form. Bei pastösen Medien kann die Fließfähigkeit nur unter Überdruck gegeben sein, während sie bei gasförmigen, flüssigen und pulverförmigen Medien auch allein durch Gravitation gegeben sein kann. Die Erfindung betrifft auch ein Verfahren zur Herstellung einer Austragvorrichtung für Medien.

Die Austragvorrichtung weist einen einzigen oder mehrere, jeweils einteilige Wandungskörper auf, wobei aneinanderschließende Wandungskörper einteilig miteinander ausgebildet sein können. Solche Wandungskörper können platten- bzw. scheibenförmig, z.B. als Stirnwand, und/oder mantelförmig ausgebildet sein. Sie können einen Teil eines Gehäuses, wie eines äußersten Hauptgehäuses, einer Kolbeneinheit, eines Auslaßstutzens für das Medium, eines Auslaß- und/oder Einlaßstutzens für das Medium oder dgl. bilden. Jede Wandungszone bzw. jeder Wandungsbereich des Wandungskörpers definiert rechtwinklig zu den zugehörigen, voneinander abgekehrten Außen- bzw. Oberflächen Materialdicken, wobei die Wandung zwischen diesen Oberflächen einteilig bzw. mit Vollquerschnitten durchgehen kann. Diese Querschnitte können in zwei zueinander rechtwinkligen Schnittebenen definiert werden, von denen eine z.B. parallel zu einer Längsachse des Wandungskörpers und die andere quer dazu liegt.

Im wesentlichen alle Bauteile der Austragvorrichtung und insbesondere der jeweilige Wandungskörper können durch annähernd gleiche Formgebung, z.B. durch Spritzguß oder Extrusion in einer Negativform, aus einem Werkstoff hergestellt werden, welcher, bezogen auf das Materialvolumen, unter unterschiedlichen Temperaturen um einige Prozent unterschiedliche Ausdehnungen einnimmt, insbesondere im gebrauchsfertig verfestigten Zustand unter Raumtemperatur von z.B. 20°C um einen solchen Betrag gegenüber demjenigen Zustand geschrumpft ist, in welchem er z.B. bei der Herstellung auf über 100 bis 200°C erwärmt ist. Bei dieser Herstellung verfestigt der Werkstoff, z.B. ein Thermoplast, noch unter der erhöhten Temperatur zu einer Herstellungsform und schrumpft dann, z.B. nach Herausnahme aus der Form bzw. bei Abkühlung um den genannten Betrag, bis er seine Gebrauchsform erreicht hat.

Geometrisch einfache Formen, wie ebene, linear gestreckte, achssymmetrische, kreisrunde oder ähnliche Formen lassen sich einfacher herstellen als unebene, gekrümmte, nicht achssymmetrische, nicht kreisrunde oder ähnliche Formen, insbesondere weil die zur Herstellung verwendeten, formgebenden Mittel, einfacher herzustellen sind. Wird aus Gründen der Funktion der Austragvorrichtung eine weniger einfache Form des Wandungskörper benötigt, so besteht das Bedürfnis, diese in einer demgegenüber einfacheren Form herzustellen und danach unmittelbar im Anschluß daran und/oder in einem Zuge mit dieser Herstellung die einfachere Herstellungsform in die weniger einfache Gebrauchsform zu überführen.

Der Erfindung liegt ferner die Aufgabe zugrunde, eine Austragvorrichtung zu schaffen, bei welcher Nachteile bekannter Ausbildungen vermieden bzw. Vorteile der beschriebenen Art zu erzielen sind und die insbesondere Wandungskörper aufweist, welche von einer einfacheren Herstellungsform in eine weniger einfache Gebrauchsform überführt sind.

Erfindungsgemäß können benachbarte Wandungszonen des jeweiligen Wandungskörpers in der Gebrauchsform dadurch gegenüber der Herstellungsform gegeneinander ausgelenkt sein, daß sie einer thermisch beaufschlagten Nachformung unterworfen wurden. Es ist zwar denkbar, den Wandungskörper nach der Verfestigung in und Entnahme aus der Herstellungsform nochmals einer lokal begrenzten Erwärmung auszusetzen und dadurch nachzuformen, jedoch wird für diese Nachformung zweckmäßig das Schrumpfungsverhalten des Werkstoffes beim Abkühlen dadurch ausgenutzt, daß die benachbarten bzw. unmittelbar aneinander anschließenden Wandungszonen unterschiedlich schnell abgekühlt werden, wobei zwischen diesen Wandungszonen dann ein Temperaturgefälle besteht, bis sie in ihrer endgültigen formstabilen oder formsteifen Gebrauchsform gleiche Temperatur erreicht haben. In der Gebrauchsform sind insbesondere die quer zur Längsachse liegenden Querschnitte des Wandungskörpers wesentlich formstabiler bzw. formsteifer als im noch erwärmten Herstellungszustand, während eine federnde Auslenkung bzw. Biegbarkeit entlang der Längsachse unter den Gebrauchsbelastungen noch gegeben sein kann. Dicke Wandungszonen schrumpfen stärker als dünnere Wandungszonen, so daß sich bei geeigneter Zuordnung solcher unterschiedlich dicker Wandungszonen beim Schrumpfen eine signifikante Formänderung ergibt, welche z.B. gegenüber der Längsachse nicht symmetrisch erfolgt und daher zu einer Änderung des Längsverlaufes und/oder der Grundform des Querschnittes führt. Z.B. kann ein stabförmiger Wandungskörper durch die Schrumpfung einer Stabkrümmung unterworfen wird und/oder ein Querschnitt des Stabes in eine flachere, wie eine ellyptische Form überführt werden.

Die erfindungsgemäße Ausbildung eignet sich insbesondere für Mantel- bzw. langgestreckte Rohrkörper, deren Innen- und/oder Außenquerschnitte in einer achssymmetrischen Form bzw. einer Form mit kreisrunden und jeweils in einer einzigen Achse liegenden Querschnitten hergestellt werden. Liegen die Längsachsen dieser Querschnitte exzentrisch und/oder in einer gemeinsamen Axialebene unter wenigen Winkelgraden schräg zueinander, so weist der Mantel in dieser Axialebene auf einer Seite eine geringste Wandungsdicke und auf der anderen Seite der Längsachsen eine größte Wandungsdicke auf, wobei diese Wandungsdicken stetig bzw. unter fließender Änderung ineinander übergehen. Nach dem Herausnehmen des Wandungskörpers aus der Gießform schrumpft der dickere Wandungsbereich schneller als der dünnere und der Rohrkörper wird dadurch von der geradlinig gestreckten Herstellungsform in eine gekrümmte Gebrauchsform überführt, in welcher die Mittelachsen seiner beiden Enden unter einem stumpfen Winkel von z.B. mehr als 150° zueinander liegen.

Dadurch ist der Rohrkörper insbesondere als Einlaß-, Saug- bzw. Steigrohr geeignet, über dessen freies Ende die Austragvorrichtung vom Bodenbereich eines Behälter-Mediums in eine Druck- bzw. Pumpkammer ansaugt, aus welchem dieses angesaugte Medium dann durch eine Austragöffnung auszutragen ist. Das Steigrohr kann einteilig mit den den Austrag- bzw. Druckraum begrenzenden Wandungen, insbesondere mit dessen Mantel, ausgebildet sein und an die Stirnwand dieses Raumes anschließen. In Axialansicht nimmt das freie Ende des Rohres im entspannten bzw. unbelasteten Zustand eine genaue Lage gegenüber den Raumwandungen insofern ein, als es in Umfangsrichtung um die Längsachse an einer vorbestimmten Stelle liegt.

Die jeweilige Wandungszone kann parallel zur Längsachse über die gesamte Länge des Wandungskörpers die größte oder kleinste Materialdicke bzw. annähernd konstante Wandungsdicke haben, jedoch ist es auch denkbar, diese jeweilige Dicke entlang einer Steigungswendel vorzusehen, so daß der Wandungskörper beim Schrumpfen in zwei zueinander rechtwinkligen Ebenen gekrümmt wird. Vorteilhaft nimmt die Wandungsdicke zum freien Ende des Wandungskörpers unter wenigen Winkelgraden von z.B. weniger als 5° ab, um eine einfache Entformung aus der Gießform durch Herausnahme des Wandungskörpers in seiner Längsrichtung zu ermöglichen. Der dickere Wandungsbereich nimmt dabei vorteilhaft, bezogen auf seine Wandungsdicke, prozentual weniger ab als der dünne Wandungsbereich.

Ein erfindungsgemäßes Verfahren zur Herstellung einer Austragvorrichtung, bei welchem ein Wandungskörper, wie ein Mantelkörper, durch Formgebung in einer Gußform hergestellt und dann in der so gewonnenen Herstellungsform aus der Gußform herausgenommen sowie unter Abkühlung und Schrumpfung in eine Fertig- bzw. Gebrauchsform überführt wird ist erfindungsgemäß dadurch gekennzeichnet, daß benachbarte Wandungszonen des Wandungskörpers nach dem Herausnehmen aus der Gußform durch unterschiedliche Temperierung gegeneinander ausgelenkt und dadurch in die Gebrauchsform überführt werden. Zweckmäßig sind die Wandungszonen nach der Materialverfestigung und vor bzw. spätestens bis zur Entnahme aus der Gußform auf etwa gleiche Temperatur eingestellt, wobei sie nach bzw. mit Beginn der Entnahme aus der Gußform unterschiedlich schnell auf eine gemeinsame Temperatur abgekühlt und dadurch gegeneinander ausgelenkt werden. Hierzu können die Wandungszonen beim Abkühlen Wärmespeichern mit unterschiedlichen Speicherkapazitäten thermisch ausgesetzt sein, welche unmittelbar durch die Wandungszonen gebildet sein können, so daß sich eine inhärente thermische Koppelung ergibt. Beim Abkühlen werden die Wandungszonen je Längeneinheit unterschiedlich starker Schrumpfung ausgesetzt und dadurch gegeneinander ausgelenkt.

Diese und weitere Merkmale gehen außer aus den Ansprüchen aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: eine erfindungsgemäße Austragvorrichtung in Queransicht,
- Fig. 2: einen Ausschnitt der Fig. 1 in wesentlich vergrößerter Darstellung, und
- Fig. 3: einen Querschnitt durch den Wandungskörper gemäß Fig. 2.

Die Austragvorrichtung 1 weist zwei Einheiten 2, 3 auf, welche zur Betätigung bzw. Auslösung des Medienaustrages manuell gegeneinander zu bewegen, z.B. linear gegeneinander zu verschieben sind. Jede der Einheiten 2, 3 enthält ein ihre im Gebrauch freiliegende Außenseite bildendes Gehäuse 4 bzw. 5, das mit allen übrigen, einteilig mit ihm ausgebildeten Wandungskörpern durch Spritzguß aus Kunststoff hergestellt ist. Das Haupt-Gehäuse 4 der Einheit 2 ist lagestarr bzw. einteilig mit einem Medienspeicher, wie dem Hals eines Fläschchens, mit einer Befestigung 6 zu verbinden, die durch einen kappenförmigen Gehäuseabschnitt gebildet bzw. einteilig mit dem Gehäuse 4 ausgebildet sein kann. Mit radialem Abstand sowie innerhalb der Befestigung 6 bildet das Gehäuse 4 ein Druck-Gehäuse 7, das einen Druckraum 8 am Außenumfang umschließt. Der Druckraum 8 könnte durch einen mit Treibmittel zu füllenden Medienspeicher gebildet sein, ist hier aber ein im Volumen veränderbarer Pumpraum, durch dessen Verengung das in ihm befindliche Medium aus der Austragvorrichtung herausgedrückt wird. Dieser Druckraum könnte auch den einzigen Medienspeicher der Austragvorrichtung bilden.

Die Einheit 3 enthält eine Kolbeneinheit 9, welche gegenüber dem Grundkörper bzw. Gehäuse 4 entlang der Längs- bzw. Zentralachse 10 verschiebbar ist, um aus dem Druckraum 8 Medium auszustoßen und beim Rückhub wieder Medium in den Druckraum 8 anzusaugen. Die Kolbeneinheit 9 weist einen Verdränger bzw. Kolben 11 auf, welcher eine Stirnseite des Druckraumes 8 im wesentlichen schließt und an einem das Gehäuse 4 durchsetzenden bzw. aus dessen äußerem Ende herausragenden Kolbenstößel 12 angeordnet ist. Die Kolbeneinheit 9 trägt ein Auslaßventil 13, welches durch Anschlag am Ende des Pumphubes und/oder durch Fluiddruck im Druckraum 8 öffnet und bei Druckabfall selbsttätig wieder schließt.

In Verlängerung des Kolbenstößels 12 geht dieser an seinem vom Kolben 11 abgekehrten Ende in einen Auslaßstutzen 14 über, an dessen freiem Ende die Auslaßöffnung 15, z.B. eine Zerstäuberdüse, zum Austrag des Mediums ins Freie vorgesehen ist. Bei Öffnung des Ventiles 13 fließt das Medium aus dem Druckraum entlang des Innenumfanges des Hohlkolbens 11 innerhalb des Kolbenstößels 12 sowie des Austragstutzens 14 bis zum Medienauslaß 14. Der Auslaßkanal kann zwischen Ventil 13 und der Auslaßöffnung 15 durch die Innenumfänge der Körper 12, 14 und einen in diesen eingesetzten, stabförmigen Innenkörper begrenzt sein, welcher den Ventilsitz des Ventiles 13 bildet und zur Abstützung einer im Druckraum 8 liegenden Rückstellfeder für die Kolbeneinheit 9 dienen kann. Die Anordnungen 1 bis 15 liegen zweckmäßig in einer gemeinsamen Zentralachse 10 oder in gegeneinander quer versetzten, jedoch parallelen Längsachsen.

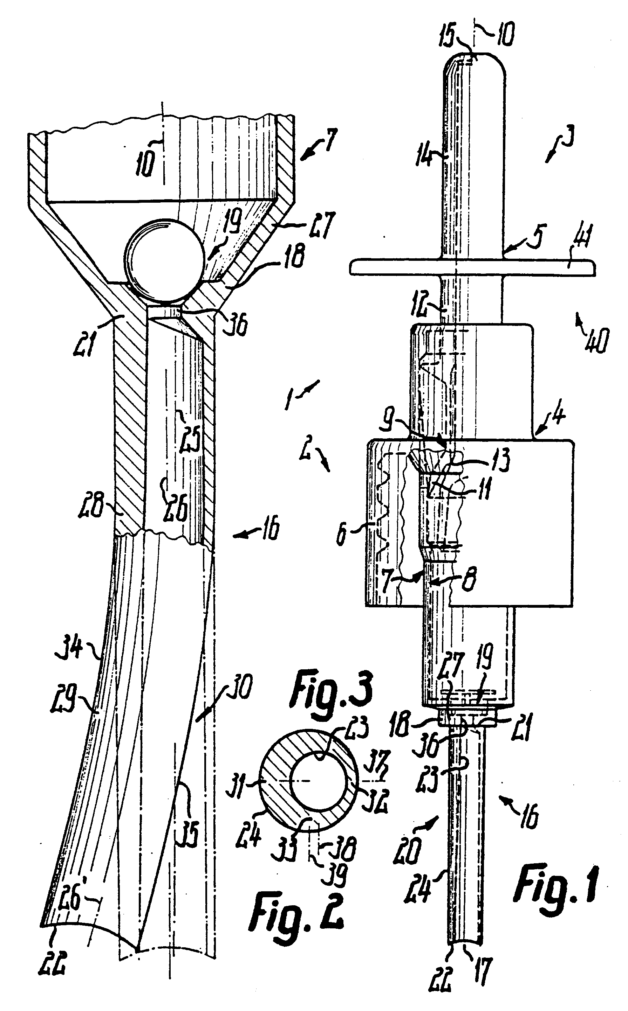

Zur Füllung des Druckraumes 8 mit Medium ist ein Wandungskörper 16, nämlich ein unter den auftretenden Montagebelastungen formsteifes Rohr oder ein zwar eigensteifes, aber unter diesen Belastungen biege-elastischer Schlauch vorgesehen. Dieser Wandungskörper 16 ist aus der in Fig. 1 dargestellten bzw. in Fig. 2 strichpunktiert angedeuteten, geradlinigen Herstellungsform erfindungsgemäß in die in Fig. 2 dargestellte, gekrümmte Gebrauchsform überführt, in welcher er die genannten Formsteifigkeiten hat. Jeder der Körper 2 bis 7, 9 und 11 bis 14 könnte einen solchen Wandungskörper bilden, enthalten oder durch ihn gebildet sein.

Das vom Auslaß 15 abgekehrte, innerste, freie Ende des Steigrohres 16 bildet eine die Endfläche durchsetzende Einlaßöffnung 17 für das Medium. Das andere Ende schließt an die äußerste Stirnwand 18 des Gehäuses 7 einteilig an, welche auch den Ventilsitz eines Einlaßventiles 19 für den Druckraum 8 bilden kann. Dieses Einlaßventil 19 kann einen tellerförmigen Ventilkörper gemäß Fig. 1, einen kugelförmigen Ventilteller gemäß Fig. 2 oder dgl. aufweisen, welcher nur durch Fluiddruck geöffnet und ggf. mit einer innerhalb des Druckraumes 8 liegenden Feder zur Schließstellung belastet sein kann. Das Gehäuse 7 weist im Bereich des Anschlusses an das Rohr 16 gegenüber diesem eine größere Außenweite auf und die Außenweite des jeweiligen Wandungskörpers liegt zweckmäßig unter 50, 20, 10 oder 5 mm. Das Rohr 16 hat bevorzugt eine größte Außenweite von weniger als 4 mm und eine größte Innenweite von weniger als 3 mm bzw. eine größte Wandungsdicke von weniger als 3 oder 2 mm. Die Wandungsdicken des Rohres 16 sind im Zusammenwirken mit dessen Materialeigenschaften, insbesondere dessen Schrumpfeigenschaften bei der Formherstellung so abgestimmt, daß Schrumpfungsmittel 20 gebildet sind. Durch diese schrumpft das Rohr 16 aus der geraden Form in die ausgelenkte bzw. gekrümmte Form, und am Ende dieser Schrumpfung erreicht es den fertig und dauerhaft ausgehärteten eigenstabilen Form- bzw. Endzustand.

Zwischen seinen beiden Enden 21, 22 hat das Rohr 16 eine Länge, die größer als das vier- bzw. sechs- oder zehnfache seiner größten Außenweite ist. Bis auf eine Entformungs-Konizität von höchstens 6 bzw. 3 Winkelgraden ist die Außen- bzw. Innenweite des Rohres 16 über diese Länge im wesentlichen konstant. Seine Wandungsdicke verringert sich zum freien Ende etwa entsprechend dieser Kontizität stetig und variiert auch in jedem Längsabschnitt über dem Umfang zwischen einem Maximalwert und einem Minimalwert stetig. Der Innenumfang 23 hat wie der Außenumfang 24 über die gesamte Länge kreisrunde Querschnitte. Der Innenumfang 23 ist zum freien Ende erweitert und der Außenumfang 24 verengt, um einen Formkern zur Formung des Innenumfanges 23 und einen Formmantel zur Formung des Außenumfanges 24 bei der Entformung am Ende 22 abziehen und entfernen zu können. Die beiden Umfänge 23, 24 bzw. deren Mittelachsen 25, 26 liegen in beiden Zuständen gemäß den Fig. 1 und 2 um ein Maß exzentrisch zueinander, welches wesentlich kleiner als die mittlere Weite des Innenumfanges 23 oder die Hälfte davon ist. Außerdem liegen die Mittelachsen 25, 26 in beiden Zuständen und über die gesamte Länge des Rohres 16 in einer gemeinsamen Axialebene 37 bzw. in zwei rechtwinklig zu dieser liegenden und um die Exzentrizität gegeneinander versetzten Axialebenen 38, 39. Die Achsen 25, 26 nähern sich zum Ende 22 unter einem der genannten Winkel an und kreuzen bzw. schneiden sich mit Abstand außerhalb des Endes 22, so daß ihre größte Entfernung beim Ende 21 liegt.

Das Ende 21 geht einteilig in einen die Stirnwand 18 bildenden Gehäuseabschnitt 27 über, der gemäß Fig. 1 über seine Länge konstante Außenweite haben kann, welche größer als die des Endes 21 und kleiner als die des Gehäuses 7 ist. Dieser, im Querschnitt napfförmige Abschnitt 27 bildet mit dem Napfboden die Stirnwand 18. Gemäß Fig. 2 ist der Gehäuseabschnitt 27 kegelstumpfförmig. Sein verjüngtes Ende geht in das Ende 21 gleicher Außenweite über. Sein erweitertes Ende geht entsprechend in den Mantel des Gehäuses 7 über. Die Endfläche 22 weist zweckmäßig gegeneinander axial versetzte Abschnitte, z.B. in Seitenansicht rechtwinklig zur Ebene 37 eine konkave Form auf, so daß das Medium der Einlaßöffnung 17 auch dann radial zufließen kann, wenn die Endfläche 22 im Bereich diametral gegenüberliegender Stellen an der Innenfläche des Medienspeichers anliegt.

Durch die beschriebene Ausbildung sind in Längsrichtung des Rohres 16 benachbarte bzw. aneinanderschließende Wandungszonen 28, 29 gebildet, welche sich jeweils über den gesamten Rohrumfang erstrecken und bei Schrumpfung unter Bildung einer Krümmung 30 des Rohres 16 gegeneinander auslenken. Dadurch wird das Ende 22 gegenüber der Achse 10 in einer genau definierten Radialrichtung seitlich in seine Gebrauchsform ausgelenkt, in welcher es etwa an die Hüllfläche um die Außenseite des Gehäuses 7 angrenzen kann. Im Querschnitt gemäß Fig. 3 bildet der Mantel des Rohres 16 auf einer Seite der Ebenen 38, 39 und im Bereich der Ebene 37 einen dicksten Wandungsbereich 31. Auf der anderen Seite der Ebene 38, 39 bildet der Mantel im Bereich der Ebene 37 einen dünnsten Wandungsbereich 32. Beide Wandungsbereiche 31, 32 gehen über einander beiderseits der Ebene 37 gegenüberliegende Wandungsbereiche 33 ineinander über, die jeweils annähernd über 180° gekrümmt sind und vom Bereich 31 zum Bereich 32 in der Dicke stetig abnehmen. Die Wandungsbereiche 31 bis 33 sind allein durch die Umfänge 23, 24 begrenzt.

Beim Schrumpfen und Krümmen verbleibt damit das Rohr 16 bzw. dessen Achse 25, 26 stets über die gesamte Länge in der Ebene 37 und die Auslenkung erfolgt ausschließlich quer bzw. rechtwinklig zu den Ebenen 38, 39. Die Endfläche 22 kann gegenüber der Achse 25 bzw. 26 derart schräg vorgesehen sein, daß sie im ausgelenkten Zustand etwa rechtwinklig zur Achse 10 bzw. parallel zum Boden des Medienspeichers liegt und so auch letzte Medienreste aus diesem herausgesaugt werden können. Durch den einteiligen Anschluß des Rohres 16 an das Gehäuse 7 kann der zugehörige Längsabschnitt des Rohres 16 von Krümmung freibleiben, so daß die Krümmung 30 erst in einem Abstand vom Ende 21 beginnt, der mindestens einem Viertel, einem Drittel oder der Hälfte der Länge des Rohres 16 entspricht. Im Bereich der Krümmung können die Querschnitte 23, 24 sich in Richtung einer elliptischen Gebrauchsform verziehen bzw. schrumpfen. Die Mittelachse 26' des ausgelenkten Endes 22 liegt unter einem spitzen Winkel zur Achse 10, der größer als die genannten Konizitätswinkel ist und höchstens 40, 30 oder 20° beträgt.

Erfindungsgemäß ist somit ein definiert vorgekrümmtes und eigensteifes Steigrohr 16 gebildet. Die Dicken der Wandungsbereiche 31 bis 33 nehmen zum Ende 22 bzw. parallel zur Achse 25, 26 stetig ab. Die Krümmung 30 bildet im Wandungsbereich 31 am Außenumfang 24 eine Krümmungs-Innenseite 34 und im Wandungsbereich 32 am Außenumfang 24 eine Krümmungs-Außenseite 35. Entsprechend umgekehrt sind die Krümmungs-Verhältnisse des Innenumfanges 23 in den Bereichen 31, 32. Der Innenumfang 23 schließt beim Ende 21 an das weitere bzw. gleich weite Ende eines exzentrisch trichterartig verjüngten Kanalabschnittes an, dessen engeres Ende an einen die Stirnwand 18 durchsetzenden Durchlaß 36 für das Medium anschließt. Der zylindrische Durchlaß 36 ist wesentlich enger als der Innenumfang 23, liegt in der Achse 26 bzw. 10 und ist von einem Innenumfang begrenzt, welcher im Wandungsbereich 31 parallel zur Achse 25 bzw. 26 sowie stufenfrei geradlinig an den Innenumfang 23 anschließt. Dadurch kann der Trichterabschnitt wie der Durchlaß 36 durch denselben Formkern wie der Innenumfang 23 in einfacher Weise hergestellt werden. Der Durchlaß 36 schließt an der vom Trichterabschnitt abgekehrten Seite unmittelbar an den Ventilsitz des Ventiles 19 an.

Die Austragvorrichtung 1 ist mit einer Betätigung 40 manuell anzutreiben bzw. zu betätigen, um das Medium in einer durch den Druckraum 8 dosierten Menge aus der Öffnung 15 auszutreiben. Hierzu wird mit den Fingern einer einzigen Hand eine seitlich über die Außenumfänge der Körper 12, 14 vorstehende Handhabe 41 so gedrückt, daß die Einheit 3 in die Einheit 2 in Richtung zum Rohr 16 hinein geschoben wird. Ein Finger, insbesondere der Daumen dieser Hand kann sich dabei am Boden des Medienspeichers abstützen. Das Ende 22 kann dabei in der einspringenden Ecke zwischen der Bodenfläche und dem Innenumfang des Medienspeichers liegen und sich ggf. unter Vorspannung an einer oder beiden dieser Flächen abstützen. Bei Freigabe der Betätigung 40 kehren die Einheiten 2, 3 von selbst in ihre Ausgangslage zurück, wobei durch das Rohr 16 Medium in den sich erweiternden Druckraum 8 für den nächsten Austrag angesaugt wird.

Die angegebenen Eigenschaften, Maße, Relativlagen und dgl. können genau oder nur etwa bzw. im wesentlichen wie erläutert sowie ggf. auch stark davon abweichend vorgesehen sein.

## Patentansprüche

1. Austragvorrichtung für Medien, mit wenigstens einem Wandungskörper (16), wie einem Mantelkörper o. dgl., dadurch gekennzeichnet, daß der Wandungskörper (16) in quer zueinander liegenden ersten und zweiten Querschnitten benachbarte Wandungszonen (28, 29) aufweist und/oder zur Herstellung von einer temperierten Herstellungsform unter Materialschrumpfung in eine abgekühlte Gebrauchsform überführt ist und daß insbesondere die Austragvorrichtung Mittel (20) zur gegenseitigen Querauslenkung der benachbarten Wandungszonen (28, 29) in die Gebrauchsform unter Temperierung aufweist.

2. Austragvorrichtung nach Anspruch 1, dadurch gekennzeichnet, daß Schrumpfmittel (20) zur Querauslenkung bei der Materialschrumpfung vorgesehen sind und die Wandungszonen (28, 29) unterschiedlich schrumpfend ausgebildete Wandungsbereiche (31, 32, 33) enthalten, daß insbesondere die Wandungsbereiche (31, 32, 33) unterschiedlich dicke maximale Querschnitte aufweisen und daß vorzugsweise die unterschiedlichen Querschnitte unter stetiger Dickenänderung ineinander übergehen.

3. Vorrichtung nach Anspruch 1 oder 2, dadurch gekennzeichnet, daß die Querauslenkung eine Krümmung (30) mit einer konkaven Innenseite (34) sowie einer konvexen Außenseite (35) bildet und daß die Querschnitte entlang der Innenseite (34) dicker als entlang der Außenseite (35) sind, daß insbesondere die Innenseite (34) und die Außenseite (35) durch voneinander abgekehrte Seiten einander im Abstand gegenüberliegender Wandungsbereiche (31, 32) unterschiedlicher Dicke gebildet sind und daß vorzugsweise die Wandungsbereiche (31, 32, 33) einteilig ineinander übergehen.

4. Austragvorrichtung nach einem der vorhergehenden Ansprüche, dadurch gekennzeichnet, daß bei einem Mantelkörper wie einem entlang einer Längsachse (25, 26) langgestreckten Rohrkörper (16), die zur Längsachse (25, 26) querliegenden ersten Querschnitte Innen- und Außenquerschnitte enthalten, welche exzentrisch zueinander liegende Mittelachsen (25, 26) definieren, daß insbesondere mindestens einer der ersten Querschnitte zu wenigstens einer Axialebene (37) der Längsachse (25, 26) symmetrisch ist und daß vorzugsweise mindestens einer der ersten Querschnitte im wesentlichen kreisrund bis schwach oval ist, und/oder daß mindestens ein Wandungsbereich (31, 32, 33) entlang der Längsachse (25, 26) unterschiedliche Dicken aufweist, daß insbesondere wenigstens einer der Wandungsbereiche (31, 32, 33) sich stetig und/oder gleich gerichtet ändernde Dicken aufweist und daß vorzugsweise die maximalen Querschnitte der beiden Wandungsbereiche (31, 32) im wesentlichen in einer gemeinsamen Axialebene (37) wenigstens einer der Längsachsen (25, 26) liegen.

5. Austragvorrichtung nach einem der vorhergehenden Ansprüche, dadurch gekennzeichnet, daß die Dicke mindestens eines Wandungsbereiches (31, 32, 33) sich über die gesamte Länge des Wandungskörpers (16) ändert, daß sich insbesondere die Dicke der beiden Wandungsbereiche (31, 32, 33) entlang der Längsachse (25, 26) je Längeneinheit unterschiedlich ändert und daß sich vorzugsweise die Dicke des dickeren Wandungsbereiches (31) je Längeneinheit prozentual weniger ändert als die Dicke des dünneren Wandungsbereiches (32), und/oder daß der Wandungskörper (16) Umfangsflächen, nämlich eine Innenfläche (23) und eine Außenfläche (24) aufweist, von denen mindestens eine im wesentlichen über ihre gesamte Länge spitzwinklig konisch ist, daß insbesondere die Umfangsflächen (23, 24) entgegengesetzt konisch sind und daß vorzugsweise die Mittelachsen (25, 26) der Umfangsflächen (23, 24) sich zu einem freien Ende (22) des Wandungskörpers (16) spitzwinklig annähern.

6. Austragvorrichtung nach einem der vorhergehenden Ansprüche, dadurch gekennzeichnet, daß der Wandungskörper (16) im Austragzustand am Ende eines Haupt-Gehäuses (4) der Austragvorrichtung (1) frei vorstehend vorgesehen ist, daß insbesondere der Wandungskörper (16) einteilig mit dem Hauptgehäuse (4) ausgebildet ist und daß vorzugsweise der Wandungskörper (16) ein Ende (21) mit größter Wandungsdicke aufweist, das an eine Stirnwand (18) des Hauptgehäuses (4) anschließt, deren Wandungsdicke etwa der größten Wandungsdicke des Wandungskörpers (16) entspricht.

7. Austragvorrichtung nach einem der vorhergehenden Ansprüche, dadurch gekennzeichnet, daß sie im Bereich eines Gehäuses (4) eine Zentralachse (10) definiert und daß eine Mittelachse (26) des Wandungskörpers (16) etwa in der Zentralachse (10) liegt, daß insbesondere eine Stirnwand (18) des Gehäuses (4) von einer in der Zentralachse (10) liegenden Strömungsöffnung (36) durchsetzt ist und daß vorzugsweise der Wandungskörper (16) ein flach gekrümmtes Steigrohr ist, dessen beide Ende (21, 22) im entspannten Zustand quer zur Rohrachse gegeneinander versetzt sind.

8. Austragvorrichtung nach einem der vorhergehenden Ansprüche, dadurch gekennzeichnet, daß der Wandungskörper (16) aus Kunststoff besteht, daß insbesondere der Wandungskörper (16) aus einem thermoplastischen Kunststoff besteht und daß vorzugsweise der Wandungskörper (16) als Spritzgußteil oder Extrusionsteil ausgebildet ist.

9. Verfahren zur Herstellung einer Austragvorrichtung (1), bei welchem ein Wandungskörper (16), wie ein Mantelkörper o. dgl. durch Formgebung in einer Gußform o. dgl. hergestellt und dann in der so gewonnenen Herstellungsform aus der Form herausgenommen wird, dadurch gekennzeichnet, daß der Wandungskörper (16) unter Abkühlung bzw. Schrumpfung in die Gebrauchsform überführt wird und/oder daß benachbarte Wandungszonen (28, 29) des Wandungskörpers (16) nach dem Herausnehmen durch unterschiedliche Temperierung gegeneinander ausgelenkt bzw. dadurch in die Gebrauchsform überführt werden.

10. Verfahren nach Anspruch 9, dadurch gekennzeichnet, daß Wandungsbereiche (31, 32) der Wandungszonen (28, 29) nach Materialverfestigung und vor Entnahme aus der Gußform auf etwa gleiche Temperatur eingestellt sind und nach der Entnahme aus der Gußform unterschiedlich schnell auf eine gemeinsame Temperatur abgekühlt werden, daß insbesondere die Wandungsbereiche (31, 32) beim Abkühlen Wärme speichern mit unterschiedlicher Speicherkapazität durch thermische Koppelung ausgesetzt werden und daß vorzugsweise die Wandungsbereiche (31, 32) je Längeneinheit unterschiedlich starker Schrumpfung ausgesetzt werden.
